# EUROPEAN PATENT APPLICATION

(11) **EP 4 309 766 A1**
(43) Date of publication of application: **24.01.2024**
(21) Application number: 21931696.5
(22) Date of filing: 05.11.2021
(51) Int. Cl.: B01D 53/50, B01D 53/56, B01D 53/68, B01D 53/81, B01D 53/96, B01J 20/08, B01J 20/34, C01F 7/78

(54) **METHOD FOR TREATING ACIDIC EXHAUST GAS, EQUIPMENT FOR TREATING ACIDIC EXHAUST GAS, AND INCINERATION FACILITY**

(30) Priority: 15.03.2021 JP 2021041604
(71) Applicant: Kurita Water Industries Ltd., Tokyo 164-0001 (JP); Tohoku University, Sendai-shi, Miyagi 980-8577 (JP)
(72) Inventor: ITOU, Ichirou, Tokyo 164-0001 (JP); HAN, Tianye, Tokyo 164-0001 (JP); YOSHIOKA, Toshiaki, Sendai-shi, Miyagi 980-8577 (JP); KAMEDA, Tomohito, Sendai-shi, Miyagi 980-8577 (JP)
(74) Representative: TBK
(86) International application number: PCT/JP2021/040840
(87) International publication number: WO 2022/195953

(57) **Abstract**

A method for treating an acid exhaust gas having a first step of treating an acidic gas in an acid exhaust gas with a OH-type Mg-Al layered double hydroxide, an equipment for treating an acid exhaust gas having means for performing the method for treating, and an incineration facility having the equipment for treating.

## Description

### Technical Field

The present invention relates to a method for treating an acid exhaust gas, an equipment for treating an acid exhaust gas, and an incineration facility.

### Background Art

In combustion exhaust gas that is discharged from incinerators in incineration plants, acidic gas, which is a harmful acidic material, such as hydrogen fluoride is contained. Therefore, before the release of combustion exhaust gas into the atmosphere, there is a need to reject the acidic gas. Hereinafter, combustion exhaust gas containing acidic gas will be referred to as acid exhaust gas.

Patent Literature 1 describes a method for treating an acid exhaust gas in which an acid exhaust gas that occurs in an incineration plant is brought into contact with a solid-form acid exhaust gas treatment agent containing a layered double hydroxide, thereby treating an acidic material such as hydrogen chloride.

### Citation List

### Patent Literature

PTL1: JP 2016-190199 A

### Summary of Invention

### Technical Problem

However, in the method for treating an acid exhaust gas described in Patent Literature 1, there has been a problem in that the usage amount of the layered double hydroxide increases due to the fact that the reaction rate between the layered double hydroxide and an acidic gas component in the acid exhaust gas is slow. In addition, an increase in the usage amount of the layered double hydroxide creates a problem in that the size of an equipment for treating is likely to increase.

In addition, in the case of a CO₃-type Mg-Al layered double hydroxide, which is known as an acid exhaust gas treatment agent, there has been a problem in that, as a regenerant used to regenerate the CO₃-type Mg-Al layered double hydroxide subjected to the treatment of an acid exhaust gas, an expensive carbonate needs to be used. The use of an expensive regenerant leads to an increase in initial and running cost, and, in a case where the usage amount of the layered double hydroxide is large as described above, this problem is significant.

In consideration of the above-described problems, an objective of the present invention is to provide a method for treating an acid exhaust gas, an equipment for treating an acid exhaust gas, and an incineration plant that are capable of reducing the amount of a layered double hydroxide necessary for the treatment of an acid exhaust gas and capable of suppressing an increase in cost at the time of regenerating the layered double hydroxide subjected to the treatment of the acid exhaust gas.

### Solution to Problem

As a result of repeating intensive studies to solve the above-described problems, the present inventors found that the above-described problems can be solved by treating an acid exhaust gas with a OH-type Mg-Al layered double hydroxide and completed the present invention.

That is, the present invention provides [1] to [10] below.
[1] A method for treating an acid exhaust gas having a first step of treating an acidic gas in an acid exhaust gas with a OH-type Mg-Al layered double hydroxide.
[2] The method for treating an acid exhaust gas according to [1], wherein the OH-type Mg-Al layered double hydroxide used in the first step contains a regenerated product obtained by exchanging an interlayer anion of a break-through OH-type Mg-Al layered double hydroxide with a hydroxide ion.
[3] The method for treating an acid exhaust gas according to [1] or [2], further having a second step of ion-exchanging an interlayer anion of a break-through OH-type Mg-Al layered double hydroxide with a hydroxide ion to generate a regenerated product of the OH-type Mg-Al layered double hydroxide,
   wherein in the first step, at least a part of the regenerated product generated in the second step is used.
[4] The method for treating an acid exhaust gas according to [1] or [2], further having a second step of ion-exchanging an interlayer anion of a break-through OH-type Mg-Al layered double hydroxide with a hydroxide ion to generate a regenerated product of the OH-type Mg-Al layered double hydroxide,
   wherein in the second step, the regenerated product is generated using the OH-type Mg-Al layered double hydroxide subjected to an acid exhaust gas treatment in the first step.
[5] The method for treating an acid exhaust gas according to [1] or [2], further having a second step of ion-exchanging an interlayer anion of a break-through OH-type Mg-Al layered double hydroxide with a hydroxide ion to generate a regenerated product of the OH-type Mg-Al layered double hydroxide,
   wherein the first step and the second step constitute one cycle, the cycle is repeatedly performed, and
   as at least a part of the OH-type Mg-Al layered double hydroxide to be used in the first step of any of second or later cycles, a regenerated product regenerated in the second step of a cycle prior to the cycle is used.
[6] A equipment for treating an acid exhaust gas having means for performing the method for treating an acid exhaust gas according to any one of [1] to [5].
[7] The equipment for treating an acid exhaust gas according to [6], having a first unit including: a container that accommodates the OH-type Mg-Al layered double hydroxide used in the first step; and a first pipe for guiding an acid exhaust gas that occurs from an occurrence source to the container.
[8] The equipment for treating an acid exhaust gas according to [7] further having a second unit including: a regeneration device that generates a regenerated product by exchanging an interlayer anion of a break-through OH-type Mg-Al layered double hydroxide with a hydroxide ion; and a second pipe for guiding the regenerated product from the regeneration device to the first unit.
[9] The equipment for treating an acid exhaust gas according to [8], wherein the second pipe guides the OH-type Mg-Al layered double hydroxide subjected to an acid exhaust gas treatment from the first unit to the regeneration device and guides the regenerated product from the regeneration device to the first unit.
[10] An incineration facility having an incinerator and the equipment for treating an acid exhaust gas according to any one of [6] to [9].

### Advantageous Effect of Invention

According to the present invention, it is possible to provide a method for treating an acid exhaust gas, an equipment for treating an acid exhaust gas, and an incineration facility that are capable of reducing the amount of a layered double hydroxide necessary for the treatment of an acid exhaust gas and capable of suppressing an increase in cost at the time of regenerating the layered double hydroxide subjected to the treatment of the acid exhaust gas.

### Brief Description of Drawings

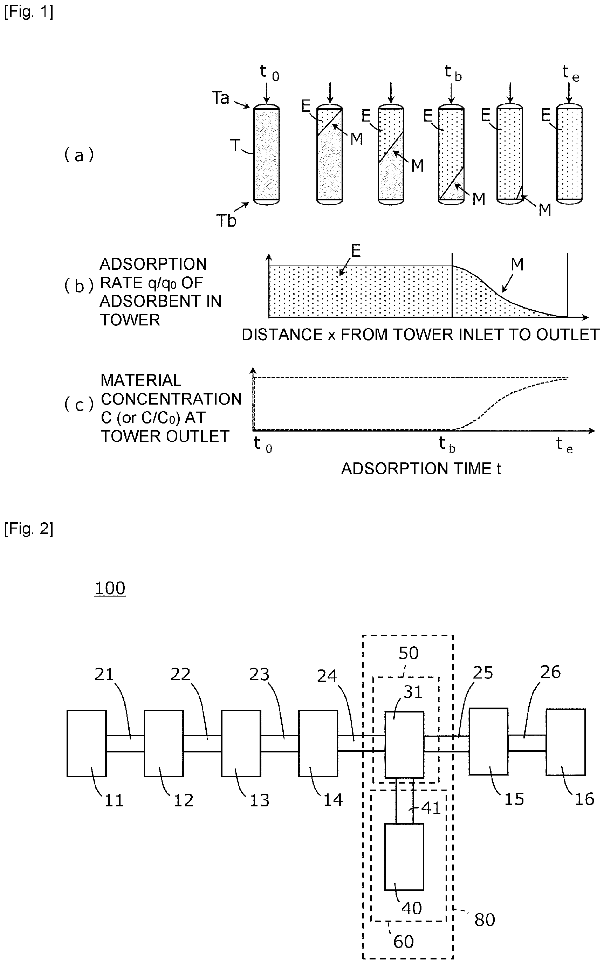

[Fig. 1] Fig. 1 is a view schematically showing a temporal change in the adsorption status of an adsorption target material when a fluid containing the adsorption target material is circulated in an adsorption tower filled with an adsorbent. Fig. 1(a) shows a temporal transition of the concentration gradient of the adsorption target material in the adsorption tower, Fig. 1(b) shows the adsorption rate of the adsorbent at an arbitrary position from the inlet of the adsorption tower to the outlet of the adsorption tower at a break-through time (t_{B}), and Fig. 1(c) shows a temporal change in the concentration of the adsorption target material at the outlet of the adsorption tower from the break-through time (t_{B}) forward.
[Fig. 2] Fig. 2 is a schematic configuration view showing an example of an equipment for treating an acid exhaust gas and an incineration facility according to an embodiment of the present invention.
[Fig. 3] Fig. 3 is a schematic view showing an example of the status of the treatment, regeneration and transfer of a layered double hydroxide in first and second units and a transition thereof while first and second steps are performed.
[Fig. 4] Fig. 4 is a view showing break-through curves of an example and a comparative example.

### Description of Embodiment

Hereinafter, a method for treating an acid exhaust gas, an equipment for treating an acid exhaust gas, and an incineration facility according to an embodiment of the present invention will be described.

### [Method for Treating Acid Exhaust Gas]

The method for treating an acid exhaust gas according to the embodiment of the present invention is a method for treating an acid exhaust gas having a first step of treating an acidic gas in an acid exhaust gas with a OH-type Mg-Al layered double hydroxide.

In the method for treating an acid exhaust gas, in the first step, an acid exhaust gas that occurs from an occurrence source such as an incinerator is brought into contact with a OH-type Mg-Al layered double hydroxide, thereby rejecting an acidic gas component such as hydrogen chloride that is contained in the acid exhaust gas.

In the method for treating an acid exhaust gas, the OH-type Mg-Al layered double hydroxide is used as a treatment agent of the acid exhaust gas, which creates the following advantages.

First, the OH-type Mg-Al layered double hydroxide has a high hydrogen chloride adsorption speed compared with CO₃-type Mg-Al layered double hydroxides, which are known as a treatment agent of acid exhaust gas. The reason therefor is not limited to this, but is considered as one cause that the reaction between the CO₃-type Mg-Al layered double hydroxide and hydrogen chloride is an ion exchange reaction between OH⁻ and CO₃²⁻ in the interlayer water of the Mg-Al layered double hydroxide whereas, in the case of the OH-type Mg-Al layered double hydroxide, not only an ion exchange reaction but also an acid-base reaction between OH⁻ and H⁺ in the interlayer water occur.

In addition, the high hydrogen chloride adsorption speed decreases the amount of the OH-type Mg-Al layered double hydroxide necessary for the reaction with the acidic gas component in the acid exhaust gas. This makes it possible to reduce the sizes of facilities for treating an acid exhaust gas.

In addition, in order to obtain a OH-type Mg-Al layered double hydroxide capable of treating an acid exhaust gas (hereinafter, simply referred to as "regenerated product" in some cases) by regenerating the break-through OH-type Mg-Al layered double hydroxide, an inexpensive regenerant such as sodium hydroxide may be used, and it is possible to make carbonates that are considered to be necessary for the regeneration of break-through CO₃-type Mg-Al layered double hydroxide unnecessary. This makes it possible to reduce the cost relating to the regeneration of layered double hydroxides.

In addition, as described above, since the amount of the OH-type Mg-Al layered double hydroxide necessary for the treatment of an acid exhaust gas is small, the usage amount of the regenerant necessary for regeneration also becomes small. Therefore, it is possible to significantly reduce the initial cost, and it is also possible to significantly reduce the running cost in facilities where the treatment of an acid exhaust gas and the regeneration of a layered double hydroxide are repeated.

Hereinafter, the first step and other steps that can be performed in the method for treating an acid exhaust gas will be described in detail.

### <First Step>

In the first step, an acid exhaust gas that occurs from an occurrence source such as an incinerator is brought into contact with the OH-type Mg-Al layered double hydroxide, thereby rejecting acidic gas components such as hydrogen chloride, sulfur oxide and nitrogen oxide in the acid exhaust gas.

The OH-type Mg-Al layered double hydroxide is nanoparticles having a structure in which layered hydroxide base layers and intermediate layers composed of interlayer anions and interlayer water are alternately laminated. In addition, the OH-type Mg-Al layered double hydroxide exchanges, for example, hydrogen sulfide in a chlorine ion form, sulfur oxide in a sulfate ion form and nitrogen oxide in a nitrate ion form, respectively, with the interlayer anions to incorporate these components and is thus capable of rejecting the acidic gas components from the acid exhaust gas.

In the first step, the acidic gas component can be rejected by, for example, passing a gas to be treated through a container where the nanoparticles of the OH-type Mg-Al layered double hydroxide are accommodated to bring the gas to be treated into contact with the OH-type Mg-Al layered double hydroxide.

As described above, the OH-type Mg-Al layered double hydroxide has a high adsorption speed with respect to the acidic gas component in the acid exhaust gas, particularly, hydrogen sulfide, compared with CO₃-type Mg-Al layered double hydroxides, which are known as a treatment agent of acid exhaust gases. In addition, in a case where a treatment agent having a high adsorption speed is used, the amount of the treatment agent necessary for the treatment of an acid exhaust gas decreases, and it becomes possible to design compact and economical facilities for treating. The reason therefor will be described below.

Ordinarily, in a case where a fluid containing a certain concentration of an adsorption target material is caused to flow in an adsorption tower filled with an adsorbent at a certain flow rate, the temporal change in the adsorption rate of the adsorption target material in the adsorption tower is considered to be equal to the temporal change in the concentration of the adsorption target material at the outlet of the adsorption tower (hereinafter, referred to as the tower outlet).

In a case where a gas containing a certain concentration of an adsorption target material is caused to flow in an adsorption tower filled with an adsorbent at a certain flow rate, the adsorption target material is sequentially adsorbed by the adsorbent from the inlet side of the adsorption tower. In the adsorption tower, the adsorption target material travels toward the tower outlet at a certain rate while maintaining a certain width of concentration gradient. A curve showing the temporal change in the concentration of the adsorption target material at the tower outlet after a time taken for the tip of the concentration gradient of the adsorption target material to reach the tower outlet (break-through time) elapses is referred to as "break-through curve" and serves as an important element in designing adsorption towers.

The temporal change in the adsorption status of the adsorption target material when the fluid containing the adsorption target material has been caused to flow in the adsorption tower filled with the adsorbent is shown as a schematic view shown in Fig. 1 (refer to Eiji Ishizaki, Research of Calculator Simulation of Adsorption Dynamics in Adsorption Tower, Ph. D. thesis, Graduate School of Sci. and Eng., Ibaraki Univ., September 2016, pp. 28 and 29). Here, Fig. 1(a) shows the temporal transition of the concentration gradient of the adsorption target material in the adsorption tower, Fig. 1(b) shows the adsorption rate of the adsorbent at an arbitrary position from the inlet of the adsorption tower (hereinafter, referred to as the tower inlet) to the outlet at the break-through time (t_{B}), and Fig. 1(c) shows the temporal change in the concentration of the adsorption target material at the outlet of the adsorption tower, including the period of time from the break-through time (t_{B}) forward.

As shown in Fig. 1(a), in a case where the fluid containing a certain concentration (C₀) of the adsorption target material has been caused to flow in the adsorption tower T at a certain flow rate, as time elapses, a stable material concentration gradient indicated by a reference sign M (hereinafter, also referred to as material transfer zone (MTZ)) travels downward in Fig. 1(a) toward the tower outlet Tb while forming an adsorption equilibrium zone E. In addition, at the break-through time (t_{B}), the material in the fluid begins to leak from the tower outlet Tb. After that, the concentration (C) of the adsorption target material at the tower outlet Tb soon reaches the concentration (C₀) as time elapses as shown in Fig. 1(c). That is, Fig. 1(c) shows the break-through curve.

Fig. 1(b) shows the adsorption rate (adsorption amount (q)/saturated adsorption amount (q₀)) of the adsorbent at an arbitrary position from the tower inlet Ta to the outlet Tb at the break-through time (t_{B}). That is, Fig. 1(b) shows the adsorption state in the adsorption tower T when the break-through time (t_{B}) is reached. In addition, a curve showing the change in the adsorption rate (q/q₀) in the adsorption tower T from the break-through time (t_{B}) to a time where the material adsorption amount in the adsorption tower T is saturated (tₑ), similarly, becomes equal to a curve showing the change in the concentration (C) of the adsorption target material at the tower outlet Tb or the ratio (C/C₀) of the concentration (C) to the concentration (C₀).

What has been described above shows that, when the adsorption speed of the adsorbent increases, the material concentration gradient in MTZ becomes small, and the break-through time becomes long. In addition, the change rate of the material concentration from the break-through time forward, which is obtained from the break-through curve, becomes large. Therefore, in a case where an adsorption equipment is designed so that the regeneration cycle corresponding to a time taken for the regeneration of the adsorbent to become necessary (this is also substantially the break-through time) becomes constant, as long as the saturated adsorption amount is the same, the filling amount of an adsorbent having a high adsorption speed in the adsorption tower can be designed to be small, and it becomes possible to make facilities for treating more compact and economical.

As described below, the saturated adsorption amount of hydrogen chloride by the OH-type Mg-Al layered double hydroxide and the saturated adsorption amount of hydrogen chloride by the CO₃-type Mg-Al layered double hydroxide are almost the same. Therefore, it is possible to make the usage amount of the OH-type Mg-Al layered double hydroxide having a high hydrogen chloride adsorption speed smaller than the usage amount of the CO₃-type Mg-Al layered double hydroxide, and, consequently, facilities for treating can be made more compact and economical.

### (OH-type Mg-Al Layered Double Hydroxide)

The OH-type Mg-Al layered double hydroxide, which is used as an acid exhaust gas treatment agent in the first step, is nanoparticles having a structure in which hydroxide base layers ([Mg²⁺₁₋ₓAl³⁺x(OH)₂]) and intermediate layers composed of interlayer hydroxide ions and interlayer water ([(OH-)ₓ·yH₂O]) are alternately laminated. The OH-type Mg-Al layered double hydroxide is a non-stoichiometric compound in which the hydroxide base layers have positive charges equivalent to x and, as negative ions having negative charges that compensate for these, the hydroxide ions are present in the intermediate layers.

The OH-type Mg-Al layered double hydroxide is capable of incorporating acidic gases such as hydrogen chloride, sulfur oxide and nitrogen oxide into portions between the layers while holding the hydroxide base layers. Therefore, the OH-type Mg-Al layered double hydroxide can be suitably used for acid exhaust gas treatments that reject acidic gases.

As described above, the OH-type Mg-Al layered double hydroxide has a particularly high hydrogen chloride adsorption speed and is thus capable of decreasing the amount of the OH-type Mg-Al layered double hydroxide necessary for the reaction with the acidic gas component in the acid exhaust gas.

As the OH-type Mg-Al layered double hydroxide, while there are clay minerals that are naturally produced as meixnerite, it is normal to use synthesized powder. The synthesis method is not particularly limited, and a known method (for example, the method described in Journal of Materials Science (2007) 42: 9210-9215) can be used.

In addition, as described below, the OH-type Mg-Al layered double hydroxide is obtained by regenerating a OH-type Mg-Al layered double hydroxide subjected to an acid exhaust gas treatment. At this time, it is possible to use an inexpensive regenerant such as sodium hydroxide. Therefore, the use of a regenerated product or a compound containing a regenerated product as the OH-type Mg-Al layered double hydroxide makes it easy to suppress an increase in cost compared with other anion-type Mg-Al layered double hydroxides such as a CO₃-type Mg-Al layered double hydroxide.

When the OH-type Mg-Al layered double hydroxide is used for the acid exhaust gas treatment, a layered double hydroxide other than the OH-type Mg-Al layered double hydroxide or a chemical agent other than layered double hydroxides such as calcium hydroxide (slaked lime), calcium oxide, sodium bicarbonate (baking soda), sodium carbonate, dolomite hydroxide, light burnt dolomite, aluminum hydroxide, aluminum oxide, magnesium hydroxide or magnesium oxide may be jointly used. However, from the viewpoint of the efficient regeneration and reuse of the OH-type Mg-Al layered double hydroxide, it is preferable not to mix other layered double hydroxides or chemical agents.

The OH-type Mg-Al layered double hydroxide used in the first step may contain a regenerated product.

The amount of the regenerated product in the OH-type Mg-Al layered double hydroxide used in the first step is preferably 90 mass% or more, more preferably 95 mass% or more and still more preferably 99 mass% or more. 100 mass% of the OH-type Mg-Al layered double hydroxide used in the first step may be a regenerated product. When the OH-type Mg-Al layered double hydroxide used in the first step contains a large amount of a regenerated product, a necessity of adding a new treatment agent or a necessity of disposing of the treatment agent used decreases, and environmental impacts are likely to reduce.

The regenerated product may be a regenerated product regenerated by an external step or may be a regenerated product generated by a second step to be described below. The use of a regenerated product generated by the second step decreases the necessity of adding a new treatment agent. In addition, repetition of the procedure of the regeneration and reuse of the OH-type Mg-Al layered double hydroxide used in the first step as described below makes it easy to increase the proportion of a regenerated product used in the first step.

### <Second Step>

The method for treating an acid exhaust gas may further have a step of ion-exchanging the interlayer anions of the OH-type Mg-Al layered double hydroxide subjected to the acid exhaust gas treatment with hydroxide ions to generate a regenerated product of the OH-type Mg-Al layered double hydroxide (hereinafter, referred to as the second step).

When the acidic gas component is incorporated into the portions between the layers, the interlayer hydroxide ions are exchanged with other anions derived from the acid exhaust gas such as chlorine ions, and the OH-type Mg-Al layered double hydroxide subjected to the acid exhaust gas treatment turns into a break-through OH-type Mg-Al layered double hydroxide. The break-through OH-type Mg-Al layered double hydroxide does not have a capability of further rejecting the acid exhaust gas. Therefore, when anions are exchanged again in the second step, a OH-type Mg-Al layered double hydroxide capable of treating an acid exhaust gas can be regenerated and used again for the treatment of an acid exhaust gas.

In one aspect of the method for treating an acid exhaust gas of the present invention, the break-through OH-type Mg-Al layered double hydroxide that is the regeneration target in the second step is the OH-type Mg-Al layered double hydroxide subjected to the acid exhaust gas treatment in the first step.

In this case, the OH-type Mg-Al layered double hydroxide used in the first step can be regenerated and used again for an acid exhaust gas treatment, and thus environmental impacts are likely to reduce.

In addition, when the first step and the second step are performed in the same equipment as in an equipment for treating to be described below, the regeneration target is generated near a position where regeneration is performed, and thus there is no need to transfer the regeneration target a long distance, the second step can be easily performed, and it becomes easy to obtain a highly pure regenerated product.

In another aspect of the method for treating an acid exhaust gas of the present invention, at least a part of the regenerated product generated in the second step is used in the first step.

When the regenerated product generated in the second step is used in the first step, the necessity of adding a new treatment agent decreases, which makes it easy to reduce the running cost in the case of continuously performing the treatment of an acid exhaust gas.

At least a part of the regenerated layered double hydroxide may also be moved to the outside of the equipment for treating and used in an external equipment.

In still another aspect of the method for treating an acid exhaust gas of the present invention, the first step and the second step constitute one cycle, the cycle is repeatedly performed, and, as at least a part of the OH-type Mg-Al layered double hydroxide to be used in the first step of any of second or later cycles, a regenerated product regenerated in the second step of a cycle prior to the cycle is used.

In the present aspect, the OH-type Mg-Al layered double hydroxide, which is a treatment agent of an acid exhaust gas, can be regenerated and repeatedly used, and thus it becomes easy to further reduce the running cost. In addition, it becomes easy to continue the acid exhaust gas treatment for a long period of time.

In the present aspect, in a case where the number of times of regeneration reaches a pre-set upper limit, the OH-type Mg-Al layered double hydroxide may be replaced with an unused synthetic product. In addition, in order to maintain high acid exhaust gas treatment performance, a fixed amount of an unused synthetic product may be added at a predetermined timing.

### (Regenerant)

As the regenerant used to regenerate the break-through OH-type Mg-Al layered double hydroxide, sodium hydroxide, potassium hydroxide and the like are exemplary examples. These regenerants are inexpensive compared with carbonates that are used as a regenerant for break-through CO₃-type Mg-Al layered double hydroxides and make it easy to reduce the cost necessary for the regeneration of layered double hydroxides.

The OH-type Mg-Al layered double hydroxide subjected to the acid exhaust gas treatment can be regenerated by, for example, being mixed, stirred and ion-exchanged with a sodium hydroxide aqueous solution having a concentration of 0.4 mass% or more at room temperature to 80°C.

The usage amount of the regenerant used in the second step is not particularly limited, but is preferably 10 to 30 parts by mass, more preferably 10 to 20 parts by mass and still more preferably 10 to 15 parts by mass with respect to 100 parts by mass of the break-through OH-type Mg-Al layered double hydroxide, which is a regeneration target.

In the second step, it is preferable that the layered double hydroxide is regenerated by exchanging the anions in the layered double hydroxide with hydroxide ions and an acidic material such as hydrogen chloride, sulfuric acid or nitric acid that is generated in association with the above-described separation of the anions is collected by a method of dissolving the acidic material in water or the like. The collected acidic material can be reused as an industrial acidic material or the like.

### (Substitution into Regenerated Product)

The OH-type Mg-Al layered double hydroxide subjected to the acid exhaust gas treatment in the first step may be substituted into an unused OH-type Mg-Al layered double hydroxide or the regenerated product collectively, may be substituted in batches of a fixed amount or may be substituted continuously and sequentially.

In the case of collective substitution, there is an advantage of easiness in the effective use of the OH-type Mg-Al layered double hydroxide, and, in the case of continuous substitution, there is an advantage of easiness in continuing the acid exhaust gas treatment, easiness in simplifying the configuration of facilities or the like.

In the case of batch substitution, it is possible to adopt an aspect in which, for example, a plurality of paths each including the OH-type Mg-Al layered double hydroxide is provided, an acid exhaust gas is selectively guided to any of the paths, and, while the acid exhaust gas is brought into contact with the OH-type Mg-Al layered double hydroxide included in the path, the OH-type Mg-Al layered double hydroxide that is included in a different path of the plurality of paths is regenerated. In this case, it is possible to perform the second step in parallel with the first step using the plurality of paths, and thus it becomes easy to effectively use the OH-type Mg-Al layered double hydroxide while making it easy to continue the acid exhaust gas treatment.

In a case where the plurality of paths including the OH-type Mg-Al layered double hydroxide is selectively used as described above, there is no need to necessarily transfer the OH-type Mg-Al layered double hydroxide from the container to a regeneration device, and it is also possible to perform regeneration by supplying the regenerant to the layered double hydroxide that is included in the paths that are not selected for the acid exhaust gas treatment.

In the case of continuous and sequential substitution, it is possible to adopt an aspect in which, for example, the OH-type Mg-Al layered double hydroxide subjected to the acid exhaust gas treatment is extracted continuously or sequentially at predetermined timings in fixed amounts and a regenerated product as much as the extracted layered double hydroxide is supplied continuously or sequentially at predetermined timings.

### [Equipment for Treating Acid Exhaust Gas]

The equipment for treating an acid exhaust gas according to the embodiment of the present invention has means for performing the method for treating an acid exhaust gas.

Examples of means for performing the above-described first step in the equipment for treating an acid exhaust gas include a unit including: a container that accommodates the OH-type Mg-Al layered double hydroxide used in the first step; and a first pipe for guiding an acid exhaust gas that occurs from an occurrence source such as an incinerator to the container. Hereinafter, the unit will be referred to as "first unit"

The first pipe configures a part of a flue through which a gas to be treated flows. In the following description, "upstream", "downstream", "upstream side", "downstream side", "inlet" and "outlet" to be mentioned below are based on a direction in which the gas to be treated flows.

In the equipment for treating an acid exhaust gas, the above-described first step is performed by introducing an acid exhaust gas that is discharged from the occurrence source such as the incinerator into the inlet of the first unit. This makes the acidic gas component such as hydrogen chloride sufficiently rejected as described above. In addition, a treated gas from which the acidic gas component has been rejected is discharged from the outlet of the first unit.

Examples of means for performing the above-described second step include a unit including: a regeneration device that generates a regenerated product by exchanging the interlayer anions of a break-through OH-type Mg-Al layered double hydroxide with hydroxide ions; and a second pipe for guiding the regenerated product from the regeneration device to the first unit. Hereinafter, the unit will be referred to as "second unit"

The second pipe may be a pipe that guides the OH-type Mg-Al layered double hydroxide subjected to the acid exhaust gas treatment to the regeneration device from the first unit and guides the regenerated product from the regeneration device to the first unit.

In this case, an end portion of the second pipe that is connected to the first unit is the inlet for the layered double hydroxide used and the outlet for the regenerated product, and an end portion that is connected to the regeneration device is the outlet for the layered double hydroxide used and the inlet for the regeneration product.

When the layered double hydroxide used is received and the regenerated product is sent out through the second pipe as described above, it is possible to repeatedly use the layered double hydroxide and to simplify the configuration of the equipment for treating.

The second unit may include an extrusion member such as a screw disposed in at least one of near the second pipe and in the second pipe. Pressing the layered double hydroxide with the extrusion member by rotating the screw or the like enables transfer from the first unit to the second unit or from the second unit to the first unit.

The regeneration device in the second unit may be configured to accept a break-through OH-type Mg-Al layered double hydroxide from the outside. In this case, it is possible to use a layered double hydroxide used that occurs in a different equipment for treating as a raw material for generating a regenerated product, which makes it easy to ensure the raw material.

The first unit may include a plurality of containers each accommodating the OH-type Mg-Al layered double hydroxide and may further include a switching valve for selectively guiding an acid exhaust gas that occurs from the occurrence source such as the incinerator to any of the plurality of containers.

When the switching valve is provided, in a case where the acid exhaust gas treatment capability of an anionic layered double hydroxide accommodated in one of the plurality of containers had deteriorated, it is possible to guide a gas to a different container with the switching valve, thereby continuing the treatment of the acid exhaust gas with a OH-type Mg-Al layered double hydroxide having a non-degraded acid exhaust gas treatment capability contained in the container without degrading the treatment capability.

The equipment for treating an acid exhaust gas may further include a concentration detection device that continuously detects the concentration of hydrogen chloride in the acid exhaust gas that is discharged from the first unit and is disposed on the downstream side of the first unit.

When the concentration detection device is provided, it is possible to perceive an increase in the concentration of hydrogen chloride in the gas. In addition, in the case of adopting the configuration where an anionic layered double hydroxide is accommodated in the plurality of containers through the switching valve as described above, it is possible to switch a container where the hydrogen chloride treatment efficiency has decreased to a different container where the hydrogen chloride treatment efficiency does not decrease with the switching valve, thereby continuing the treatment of the acid exhaust gas without degrading the treatment capability.

### [Incineration Facility]

The incineration facility according to the embodiment of the present invention has an incinerator and the equipment for treating an acid exhaust gas.

The equipment for treating an acid exhaust gas is installed downstream of the incinerator, incorporates an acid exhaust gas that is discharged from the incinerator and performs the above-described first step, thereby treating the acid exhaust gas. In the present incineration facility, since the acidic gas component in the acid exhaust gas that occurs from the incinerator is rejected with the equipment for treating, it is possible to prevent the release of an acidic material harmful to the surrounding environment.

In addition, when the equipment for treating an acid exhaust gas includes the second unit that performs the above-described second step, it is possible to regenerate the OH-type Mg-Al layered double hydroxide used generated in the first unit that performs the first step. Therefore, it is possible to efficiently continue the treatment of the acid exhaust gas by reusing the obtained regenerated product in the first unit. In addition, it is also possible to use the regenerated product generated in the second unit in other facilities for treating.

### [Specific Example of Incineration Facility Including Equipment for Treating Acid Exhaust Gas]

Hereinafter, a specific example of the incineration facility including the equipment for treating an acid exhaust gas will be described using a drawing.

Fig. 2 is a schematic configuration view showing the example of the incineration facility including the equipment for treating an acid exhaust gas according to the embodiment of the present invention. The present invention is not limited to the configuration shown in the drawing.

An incineration facility 100 shown in Fig. 2 includes an incinerator 11, a boiler 12, a gas cooling device 13, a dust collector 14, an induced draft fan 15, a chimney 16 and pipes 21 to 26 that are sequentially connected therebetween to form a flue.

In addition, the incineration facility 100 includes an equipment for treating an acid exhaust gas 80 having: a unit 50 including a container that accommodates a OH-type Mg-Al layered double hydroxide, which is an acid exhaust gas treatment agent; and a unit 60 including a regeneration device 40 that generates a regenerated product by exchanging the interlayer anions of a break-through OH-type Mg-Al layered double hydroxide with hydroxide ions.

In the incineration facility 100, the unit 50 composed of a container 31 that accommodates the OH-type Mg-Al layered double hydroxide and the pipe 24 for guiding an acid exhaust gas that occurs from the incinerator 11 to the container 31 is the first unit that performs the above-described first step.

In addition, the unit 60 including the regeneration device 40 that generates a regenerated product by exchanging the interlayer anions of the break-through anionic Mg-Al layered double hydroxide with hydroxide ions and a pipe 41 for guiding an anionic Mg-Al layered double hydroxide subjected to the treatment of the acid exhaust gas to the regeneration device 40 from the first unit 50 and guiding the regenerated product from the regeneration device 40 to the first unit 50 is the second unit that performs the above-described second step.

### (Operation of Incineration Facility)

Next, the operation of the incineration facility 100 including the equipment for treating an acid exhaust gas 80 will be described.

First, an acid exhaust gas that has occurred in the incinerator 11 is heat-recovered in the boiler 12, cooled in the cooling device 13, then, gathered in the dust collector 14 and guided to the first unit 50 in the equipment for treating an acid exhaust gas 80. In the initial state, the OH-type Mg-Al layered double hydroxide that is accommodated in the container 31 is in a state where the treatment capability does not deteriorate and is a layered double hydroxide not subjected even once to the treatment of an acid exhaust gas after synthesis, a regenerated product regenerated from a layered double hydroxide subjected to the treatment of an acid exhaust gas once or more or a mixture thereof.

In addition, the above-described first step is performed on the acid exhaust gas in the first unit. Therefore, acidic gas components such as hydrogen chloride, sulfur oxide and nitrogen oxide in the acid exhaust gas are rejected.

The treated gas from which the acidic gas components have been rejected is discharged from the first unit 50 and released from the chimney 16 through the induced draft fan 15.

On the other hand, when the break-through time has passed from the beginning of the treatment of the acid exhaust gas or when the break-through time is sufficiently approximated, the OH-type Mg-Al layered double hydroxide subjected to the treatment of the acid exhaust gas in the container 31 of the first unit 50 is transferred to the second unit 60.

In addition, a regenerated product of the OH-type Mg-Al layered double hydroxide is generated in the regeneration device 40, and the regenerated product is transferred from the second unit 60 to the first unit at a predetermined timing.

At the time of transferring the layered double hydroxide from the first unit 50 to the second unit 60, a flow meter that measures the flow rate of the acid exhaust gas to be treated may be provided to perform the transfer based on the flow rate measured with the flow meter and the elapsed time.

Alternatively, a concentration detection device that continuously detects the concentration of the acidic gas component in the acid exhaust gas that is discharged from the first unit 50 may be provided on the downstream side of the first unit 50 to perform the transfer of the layered double hydroxide from the first unit 50 to the second unit 60 based on the detection result.

In addition, in a case where, as the first unit, a plurality of containers each accommodating the OH-type Mg-Al layered double hydroxide is included and a switching valve for selectively guiding the acid exhaust gas that occurs from the incinerator to any of the plurality of containers is further provided as described above, the switching valve may be controlled based on the detection result of the concentration detection device.

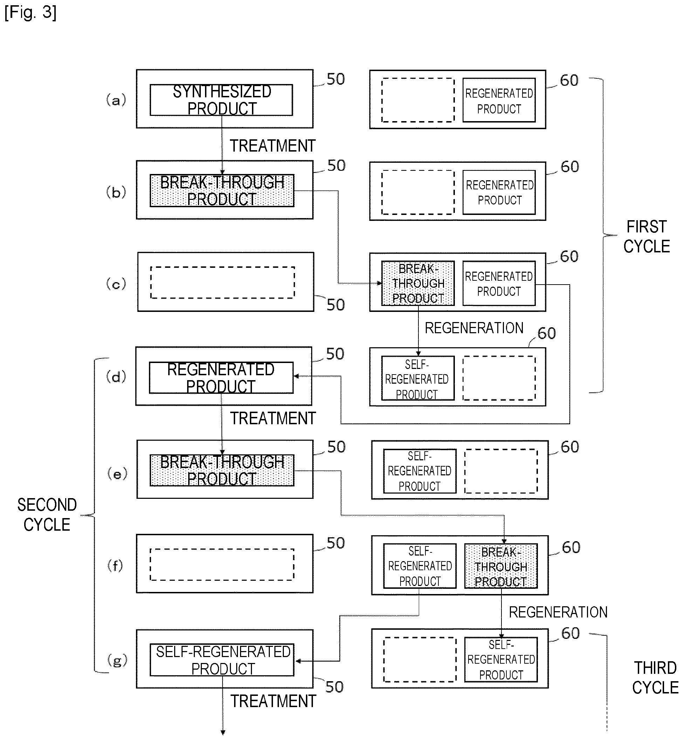

Fig. 3 is a schematic view showing an example of the status of the treatment, regeneration and transfer of the layered double hydroxide in the first and second units and a transition thereof while the first and second steps are performed. Hereinafter, at the time of performing the first and second steps, how the layered double hydroxide is treated in the first and second units will be specifically described based on Fig. 3.

In Fig. 3, for easy understanding, the second unit will be described to have an accommodation space having a volume twice or more as large as the container in the first unit and to collectively substitute the layered double hydroxide used into a regenerated product. In the case of batch or continuous substitution into a regenerated product, the timing of the transfer of the layered double hydroxide differs from that shown in Fig. 3, but it is clear that the transition is substantially the same as in Fig. 3 and thus will not be described in detail.

Fig. 3(a) shows the initial stage, and a synthesized unused OH-type Mg-Al layered double hydroxide is accommodated in the first unit 50. Instead of the synthetic product, a regenerated product capable of treating an acid exhaust gas generated outside may be accommodated or a mixture of a synthetic product and a regenerated product may be accommodated. In addition, in the second unit 60, a space in which a regenerated product of a OH-type Mg-Al layered double hydroxide capable of treating an acid exhaust gas is accommodated and a OH-type Mg-Al layered double hydroxide used is received is ensured. In Fig. 3, the regenerated product in the second unit 60 is assumed to be generated outside, but a layered double hydroxide subjected to an acid exhaust gas treatment in the first unit 50 may be accommodated in the second unit 60 in advance.

When an acid exhaust gas treatment is performed in the first unit 50, the acid exhaust gas component is incorporated into the OH-type Mg-Al layered double hydroxide, and Fig. 3(b) shows that the OH-type Mg-Al layered double hydroxide is subjected to the acid exhaust gas treatment and put into a break-through or near break-through state. In Fig. 3, the layered double hydroxide that is in a break-through or near break-through state and is not suitable for the acid exhaust gas treatment is described as "break-through product".

Next, as shown in Fig. 3(c), the break-through product in the first unit 50 is transferred to the empty space in the second unit 60. In addition, while the process transits to a stage of Fig. 3(d), a regenerated product of the OH-type Mg-Al layered double hydroxide is transferred from the second unit 60 to the first unit 50, and the regeneration of the break-through product transferred to the second unit 60 is performed. In the stage of Fig. 3(d), the regenerated product generated with the second unit 60 is a product obtained by regenerating the break-through product transferred from the first unit 50 and is thus described as "self-regenerated product" in Fig. 3.

Next, an acid exhaust gas treatment is performed in the first unit 50, whereby the regenerated product in the first unit 50 changes to a break-through product (a stage of Fig. 3(e)).

In addition, in a stage of Fig. 3(f), the break-through product is transferred from the first unit 50 to the empty space that has occurred in the second unit 60 in the stage of Fig. 3(d). In addition, while the process transits to Fig. 3(g), the self-regenerated product in the second unit 60 is transferred to the first unit 50, and a regenerated product is generated from the break-through product in the second unit 60.

Fig.3(a) to Fig. 3(d) are a first cycle, Fig. 3(d) to Fig. 3(g) are a second cycle, and Fig. 3(g) forward are third and later cycles. In the example shown in Fig. 3, the self-regenerated product regenerated in the second cycle is used for an acid exhaust gas treatment in the third cycle.

### (Other Configurations of Equipment for Treating and Incineration Facility)

In a case where the first unit includes the plurality of containers each accommodating the OH-type Mg-Al layered double hydroxide and further includes the switching valve for selectively guiding the acid exhaust gas that occurs from the incinerator to any of the plurality of containers as described above, the layered double hydroxide that is contained in a container separated from the flue can be regenerated by the above-described regeneration method by operating the switching valve. Therefore, it is possible to continue the treatment of the acid exhaust gas in parallel with the regeneration treatment that is performed by transferring the break-through product to the regeneration device.

In addition, in a case where the plurality of containers and the switching valve are provided, there is no need to necessarily transfer the layered double hydroxide to the regeneration device from the container, and the layered double hydroxide may be regenerated by bringing the regenerant into contact with the layered double hydroxide as accommodated in the container.

The regenerated product generated in the second unit 60 may be used in facilities for treating other than the equipment for treating 80 or incineration facilities other than the incineration facility 100.

As the layered double hydroxide used that is generated in the first unit 50, not only may the generated product regenerated in the second unit 60 be used, but an unused layered double hydroxide or a regenerated product generated outside may also be supplied as appropriate.

In the incineration facility 100, the second unit 60 where the regeneration of the layered double hydroxide is performed is provided inside the incineration facility 100, but the configuration is not limited thereto, and layered double hydroxide regeneration means may be disposed outside the incineration facility 100. In this case, it is preferable to provide means for extracting the layered double hydroxide subjected to the treatment of the acid exhaust gas from the first unit 60 and means for supplying the layered double hydroxide not yet subjected to the treatment or a regenerated layered double hydroxide to the first unit 60 in the incineration facility 100. In addition, each of the means may be configured to supply or extract the layered double hydroxide depending on the flow rate of the acid exhaust gas and/or the concentration of the acid gas component.

### Examples

Next, the present invention will be described in more detail using an example, but the present invention is not limited to this example.

### [Example 1]

A glass reaction tube having an inner diameter of 16 mm was filled with 0.1 g of a OH-type Mg-Al layered double hydroxide, a nitrogen gas was circulated from the upstream of the reaction tube, and each reaction tube was adjusted so that the temperature of a gas that was circulated in a tubular electric furnace reached 170°C.

The flow rate of each gas was adjusted with a mass flow controller while nitrogen was circulated so that hydrogen chloride reached 1,000 ppm, and the above-described mixed gas was circulated in the reaction tube so that the air tower rate in the reaction tube reached 1.0 m/min.

The hydrogen chloride concentration in the circulating gas at the outlet of the reaction tube after the beginning of the test was measured with an FT-IR type gas analyzer, and a break-through curve was created.

The chemical formula of the OH-type Mg-Al layered double hydroxide used in Example 1 is as described below (molecular weight: 118.86).

[Mg_{0.67}Al_{0.33}(OH)₂](OH⁻)_{0.33}·3H₂O ... Formula (1)

The OH-type Mg-Al layered double hydroxide was synthesized by a procedure to be described below.

A mixed aqueous solution having a magnesium concentration of 0.33 mol/L and an aluminum concentration of 0.17 mol/L (magnesium/aluminum = 2/1 (molar ratio)) was prepared using magnesium nitrate hexahydrate and aluminum nitrate nonahydrate.

500 mL of this mixed solution was added dropwise to 500 mL of a sodium carbonate aqueous solution having a concentration of 0.1 mol/L at 30°C under stirring. At this time, the pH was held at 10.5 by the dropwise addition of a sodium hydroxide aqueous solution having a concentration of 1.25 mol/L.

After the dropwise addition, the mixed solution was stirred at 30°C for one hour. After that, a precipitate was filtered, the mixed solution was repeatedly washed with pure water and then dried at reduced pressure at 40°C for 40 hours, thereby obtaining a CO₃-type Mg-Al layered double hydroxide.

The obtained CO₃-type Mg-Al layered double hydroxide was calcined at 500°C for two hours, then, injected into a sodium hydroxide aqueous solution having a concentration of 0.2 mol/L under a nitrogen gas stream and stirred at 30°C for three hours. After that, a precipitate was filtered, the aqueous solution was repeatedly washed with pure water and then dried at reduced pressure at 40°C, thereby obtaining a OH-type Mg-Al layered double hydroxide.

Mg_{0.67}Al_{0.33}O_{1.17} + 0.33OH⁻ + 1.17H₂O → Mg_{0.67}Al_{0.33}(OH)₂(OH⁻)_{0.33} + xOH⁻ ... Formula (2)

Since the reaction proceeded based on the theoretical formula (2), the OH-type Mg-Al layered double hydroxide was identified as the chemical formula (1).

### [Comparative Example 1]

Measurement was performed in the same manner as in Example 1 except that a CO₃-type Mg-Al layered double hydroxide was used instead of the OH-type Mg-Al layered double hydroxide, and a break-through curve was created.

The chemical formula of the CO₃-type Mg-Al layered double hydroxide used in Comparative Example 1 is as described below (molecular weight: 123.2).

[Mg_{0.67}Al_{0.33}(OH)₂](CO₃²⁻)_{0.17}·3H₂O ... Formula (3)

The CO₃-type Mg-Al layered double hydroxide was synthesized by a procedure to be described below.

A mixed aqueous solution having a magnesium concentration of 0.33 mol/L and an aluminum concentration of 0.17 mol/L (magnesium/aluminum = 2/1 (molar ratio)) was prepared using magnesium nitrate hexahydrate and aluminum nitrate nonahydrate.

This mixed solution was added dropwise to a sodium carbonate aqueous solution having a concentration of 0.1 mol/L at 30°C under stirring. At this time, the pH was held at 10.5 by the dropwise addition of a sodium hydroxide aqueous solution having a concentration of 1.25 mol/L.

After the dropwise addition, the mixed solution was stirred at 30°C for one hour. After that, a precipitate was filtered, the mixed solution was repeatedly washed with pure water and then dried at reduced pressure at 40°C for 40 hours, thereby obtaining a CO₃-type Mg-Al layered double hydroxide.

Since the reaction proceeded based on a theoretical formula of the CO₃-type Mg-Al layered double hydroxide, the above-described synthesized product was identified as the chemical formula (3).

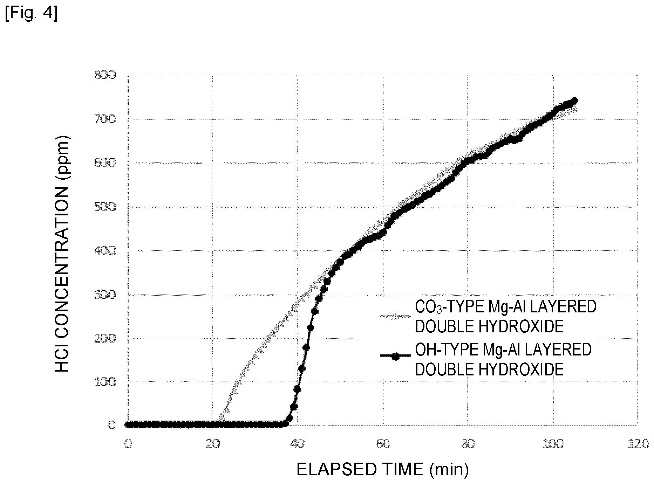

The break-through curves of the hydrogen chloride in Example 1 and Comparative Example 1 are shown in Fig. 4. As is clear from Fig. 4, in Example 1 where the OH-type Mg-Al layered double hydroxide was used, the break-through time was long, and the temporal change of the hydrogen fluoride concentration after break-through was also large compared with those in Comparative Example 1 where the CO₃-type Mg-Al layered double hydroxide was used.

In addition, the saturated adsorption amounts of hydrogen chloride tested in Example 1 and Comparative Example 1 are obtained based on the following reaction formula (4) and the molecular weights of the layered double hydroxides of the formula (1) and formula (3) and are 0.101 g/g for the OH-type Mg-Al layered double hydroxide in Example 1 and 0.098 g/g for the CO₃-type Mg-Al layered double hydroxide in Comparative Example 1. Both are almost the same values. From this fact, it is found that, in a case where the break-through time in an adsorption tower is designed to be constant, it is possible to perform the treatment of an acid exhaust gas with a smaller filling amount of a layered double hydroxide in Example 1 where the OH-type Mg-Al layered double hydroxide was used than in Comparative Example 1 where the CO₃-type Mg-Al layered double hydroxide was used.

[M₁₋ₓM'ₓ(OH)₂]Aⁿ⁻_{x/n}·mH₂O + xHCl → [M₁₋ₓM'ₓ(OH)₂]Clₓ·mH₂O + x/nAⁿ⁻ ... Formula (4)

In addition, the layered double hydroxide that has been ion-exchanged with chlorine ions is represented by the following chemical formula (5).

[M_{0.67}Al_{0.33}(OH)₂](Cl⁻)_{0.33}·3H₂O ... Formula (5)

In addition, in a case where the compound of the chemical formula (5) is regenerated into the layered double hydroxide of the chemical formula (1) using sodium hydroxide as a regenerant and regenerated into the layered double hydroxide of the chemical formula (3) using sodium carbonate as a regenerant, respectively, the regeneration reaction formulae are represented by the following formula (6) and formula (7).

[M_{0.67}Al_{0.33}(OH)₂](Cl⁻)_{0.33}·3H₂O + 0.33NaOH → [Mg_{0.67}Al_{0.33}(OH)₂](OH⁻)_{0.33}·3H₂O + 0.33NaCl ... Formula (6)

[M_{0.67}Al_{0.33}(OH)₂](Cl⁻)_{0.33}·3H₂O + 0.17Na₂CO₃ → [Mg_{0.67}Al_{0.33}(OH)₂](CO₃²⁻)_{0.33}·3H₂O + 0.33NaCl ... Formula (7)

The equivalent weights of the individual regenerants are calculated based on the formula (6), the formula (7), the molecular weights of the individual regenerants (NaOH: 40 and Na₂CO₃: 106) and the molecular weight (124.91) of the compound of the formula (5) as described above, and it is found that the layered double hydroxide can be regenerated with a smaller equivalent weight of the regenerant in Example 1 where the OH-type Mg-Al layered double hydroxide was used. "LDH" means "layered double hydroxide".
· NaOH/LDH: 0.33 × 40/124.91 ≈ 0.10567
· Na₂CO₃/LDH: 0.17 × 106/124.91 ≈ 0.14426

### Reference Signs List

11: Incinerator
12: Boiler
13: Gas cooling device
14: Dust collector
15: Induced draft fan
16: Chimney
21 to 23, 25, 26: Pipe (flue)
24: First pipe
31: Layered double hydroxide-accommodating container
40: Regeneration device
41: Second pipe
50: First unit
60: Second unit
80: Equipment for treating acid exhaust gas
100: Incineration facility

## Claims

1. A method for treating an acid exhaust gas, comprising:
a first step of treating an acidic gas in an acid exhaust gas with a OH-type Mg-Al layered double hydroxide.

2. The method for treating an acid exhaust gas according to claim 1, wherein the OH-type Mg-Al layered double hydroxide used in the first step comprises a regenerated product obtained by exchanging an interlayer anion of a break-through OH-type Mg-Al layered double hydroxide with a hydroxide ion.

3. The method for treating an acid exhaust gas according to claim 1 or 2, further comprising:
a second step of ion-exchanging an interlayer anion of a break-through OH-type Mg-Al layered double hydroxide with a hydroxide ion to generate a regenerated product of the OH-type Mg-Al layered double hydroxide,
wherein in the first step, at least a part of the regenerated product generated in the second step is used.

4. The method for treating an acid exhaust gas according to claim 1 or 2, further comprising:
a second step of ion-exchanging an interlayer anion of a break-through OH-type Mg-Al layered double hydroxide with a hydroxide ion to generate a regenerated product of the OH-type Mg-Al layered double hydroxide,
wherein in the second step, the regenerated product is generated using the OH-type Mg-Al layered double hydroxide subjected to an acid exhaust gas treatment in the first step.

5. The method for treating an acid exhaust gas according to claim 1 or 2, further comprising:
a second step of ion-exchanging an interlayer anion of a break-through OH-type Mg-Al layered double hydroxide with a hydroxide ion to generate a regenerated product of the OH-type Mg-Al layered double hydroxide,
wherein the first step and the second step constitute one cycle, the cycle is repeatedly performed, and
as at least a part of the OH-type Mg-Al layered double hydroxide to be used in the first step of any of second or later cycles, a regenerated product regenerated in the second step of a cycle prior to the cycle is used.

6. A equipment for treating an acid exhaust gas comprising means for performing the method for treating an acid exhaust gas according to any one of claims 1 to 5.

7. The equipment for treating an acid exhaust gas according to claim 6, comprising a first unit comprising: a container that accommodates the OH-type Mg-Al layered double hydroxide used in the first step; and a first pipe for guiding an acid exhaust gas that occurs from an occurrence source to the container.

8. The equipment for treating an acid exhaust gas according to claim 7, further comprising a second unit comprising: a regeneration device that generates a regenerated product by exchanging an interlayer anion of a break-through OH-type Mg-Al layered double hydroxide with a hydroxide ion; and a second pipe for guiding the regenerated product from the regeneration device to the first unit.

9. The equipment for treating an acid exhaust gas according to claim 8, wherein the second pipe guides the OH-type Mg-Al layered double hydroxide subjected to an acid exhaust gas treatment from the first unit to the regeneration device and guides the regenerated product from the regeneration device to the first unit.

10. An incineration facility comprising:
an incinerator; and
the equipment for treating an acid exhaust gas according to any one of claims 6 to 9.
